# EUROPÄISCHE PATENTSCHRIFT

(11) **EP 2 065 255 B1**
(45) Veröffentlichungstag und Bekanntmachung des Hinweises auf die Patenterteilung: **29.02.2012**
(21) Anmeldenummer: 07023258.2
(22) Anmeldetag: 30.11.2007
(51) Int. Cl.: B60Q 5/00, B60R 21/203

(54) **Lenkradhupe**
Steering wheel horn
Klaxon de volant

(43) Veröffentlichungstag der Anmeldung: 03.06.2009
(73) Patentinhaber: Autoliv Development AB, 447 83 Vårgårda (SE)
(72) Erfinder: Pietsch, Karsten, Dr.-Ing., 13469 Berlin (DE); Marotzke, Thomas, 16562 Bergfelde (DE)
(74) Vertreter: Schön, Thilo

(56) Entgegenhaltungen:
- EP-A- 1 623 886
- EP-A- 1 661 773
- EP-A- 1 702 813
- DE-U1- 29 719 275
- US-A1- 2001 035 631
- US-A1- 2006 197 323

## Beschreibung

Die vorliegende Erfindung betrifft eine Lenkradhupe für ein Kraftfahrzeug, welche eine am Lenkrad des Kraftfahrzeugs federnd kippbar gelagerte Kontaktbrücke aufweist. Solch eine Hupe, welche gemäß dem Oberbegriff des Anspruchs 1 ausgebildet ist, wird in der EP 1 623 886 A2 beschrieben.

Bei der sogenannten Kontaktbrücke handelt es sich um jenes Bauteil einer Lenkradhupe, auf das der Fahrer des Kraftfahrzeugs drückt, um einen Hupton zu erzeugen, und an dessen Vorderseite üblicherweise ein in Richtung des Fahrgastraums verkleidetes Luftsackmodul angeordnet ist.

Sofern im Rahmen der vorliegenden Erfindung in Bezug auf die Kontaktbrücke von "oben", einer "oberen Position" oder dergleichen bzw. von "unten", "einer unteren Position" oder dergleichen die Rede ist, so beziehen sich diese Angaben auf die Geradeausstellung eines mit einer Kontaktbrücke ausgestatteten Lenkrads.

Derartige Kontaktbrücken sind üblicherweise an ihrer Rückseite mit zwei oder mehr mechanisch arbeitenden Druckschaltern ausgestattet, welche beim Niederdrücken der Kontaktbrücke mit am Lenkrad befindlichen Kontaktflächen in Anlage gelangen, woraufhin von dem jeweils betätigten Druckschalter ein Schaltsignal zur Erzeugung des gewünschten Huptons abgegeben wird. Die Druckschalter sind dabei häufig auf der Rückseite von mehreren über die Kontaktbrücke verteilten Leiterplatten befestigt, welche sich ihrerseits auf der Vorderseite der Kontaktbrücke befinden, sodass in der Kontaktbrücke entsprechende Öffnungen vorgesehen werden müssen, durch welche die Druckschalter bis auf die Rückseite der Kontaktbrücke hindurchragen können. Die mit den mechanisch arbeitenden Druckschaltern bestückten Leiterplatten sind dabei über den Umfang der Kontaktbrücke verteilt angeordnet, um sicherzustellen, dass bei einer Druckbeaufschlagung der Kontaktbrücke an einer beliebigen Stelle zumindest einer der Druckschalter schließt bzw. schaltet, um ein Schaltsignal zur Erzeugung eines Huptons abzugeben.

Derartige bekannte Lenkradhupen sind jedoch mit verschiedenen Nachteilen behaftet. So werden zum einen üblicherweise mehrere Leiterplatten mit einer Vielzahl elektronischer Komponenten zur Auswertung der Schaltsignale der darauf befindlichen Druckschalter erforderlich. Ferner weisen mechanisch arbeitende Druckschalter nur verhältnismäßig unscharf definierte Schaltpunkte auf, was sich in einer Haptik für den Fahrer bemerkbar macht, die von dem Fahrer bei jeder Betätigung der Lenkradhupe anders wahrgenommen wird. Darüber hinaus sind mechanisch arbeitende Druckschalter sowohl Verschleißerscheinungen als auch Umwelteinflüssen (beispielsweise Korrosion) unterworfen, wodurch sich nicht nur die störungsfreie Funktionsfähigkeit derartiger Schalter, sondern auch die Haptik der Lenkradhupe mit der Zeit verändern kann. Außerdem weisen mechanisch arbeitende Druckschalter verhältnismäßig große Schaltwege in der Größenordnung von 0,4 mm auf, weshalb mit mechanisch arbeitenden Druckschaltern ausgerüstete Lenkradhupen verhältnismäßig ungenau zum Hupspalt reagieren.

Der vorliegenden Erfindung liegt die Aufgabe zugrunde, eine Lenkradhupe anzugeben, welche die zuvor beschriebenen Nachteile überwindet.

Diese Aufgabe wird mit einer Lenkradhupe gelöst, welche die Merkmale des Anspruchs 1 aufweist. Insbesondere weist die erfindungsgemäße Lenkradhupe eine Mehrzahl berührungslos arbeitender Näherungsschalter auf, welche derart in Bezug auf die Kontaktbrücke angeordnet sind, dass zumindest einer der Näherungsschalter infolge einer Verkippung der Kontaktbrücke ein Schaltsignal zur Erzeugung eines Huptons abgibt. Um zu vermeiden, dass mehrere Leiterplatten mit den jeweils zugehörigen elektronischen Komponenten zur Auswertung der auf der jeweiligen Leiterplatte befindlichen Schalter vorgesehen werden müssen, ist es vorgesehen, die Hall-Sensoren entlang eines einzigen Randbereichs der Kontaktbrücke anzuordnen.

Im Unterschied zu mechanisch arbeitenden Druckschaltern weisen berührungslos arbeitende Näherungsschalter wie beispielsweise magnetische Näherungsschalter oder Hall-Sensoren einen verhältnismäßig scharf definierten Schaltpunkt auf, was sich in einer dauerhaft reproduzierbaren Haptik der Lenkradhupe niederschlägt. Darüber hinaus weisen berührungslos arbeitende Näherungsschalter keine Verschleißerscheinungen auf und unterliegen auch keinen Umwelteinflüssen, was sich ebenfalls positiv auf die Reproduzierbarkeit der Haptik der erfindungsgemäßen Lenkradhupe auswirkt. Ferner handelt es sich bei berührungslos arbeitenden Näherungsschaltern im Unterschied zu mechanischen Druckschaltern um einfache elektronische Komponenten, welche keine aufwändigen mechanischen Schaltteile aufweisen, sodass derartige berührungslos arbeitende Näherungsschalter kostengünstig herzustellen bzw. zu erwerben sind, was sich in wirtschaftlicher Hinsicht als vorteilhaft erweist.

Weitere bevorzugte Ausführungsformen der erfindungsgemäßen Lenkradhupe ergeben sich aus den Unteransprüchen, der Beschreibung sowie den Zeichnungen.

Wie bereits zuvor erwähnt, kann es sich bei den Näherungsschaltern, beispielsweise um magnetische Näherungsschalter und insbesondere um Hall-Sensoren handeln. Ebenfalls wäre es jedoch möglich, die Näherungsschalter der Lenkradhupe als induktiv, kapazitiv oder elektromagnetisch arbeitende Näherungsschalter auszubilden, bei denen sich die Schwingfrequenz eines Schwingkreises ändert, wenn sich ihnen ein Körper nähert. Ferner könnten auch optische oder ultraschallbasierte Näherungsschalter zum Einsatz kommen. Erfindungsgemäß sind jedoch nur Hall-Sensoren.

Obwohl all die voran genannten Varianten berührungslos arbeitender Näherungsschalter den Vorteil aufweisen, dass sie keinerlei Reibungserscheinungen unterworfen sind und somit eine stets gleich bleibende Haptik der Lenkradhupe bewirken, erweist es sich jedoch als besonders vorteilhaft, die Näherungsschalter der Lenkradhupe als Hall-Sensoren auszubilden, da diese besonders scharf definierte Schaltpunkte aufweisen, was sich ebenfalls in einer von Betätigung zu Betätigung der Lenkradhupe gleich bleibenden Haptik auswirkt. Darüber hinaus lässt sich der Hall-Sensor als elektronisches Bauelement einfach in der vorhandenen Lenkradelektronik unterbringen.

In der Ausführungsform der Näherungsschalter als Hall-Sensoren ist vorzugsweise jedem der Hall-Sensoren ein eigener Permanentmagnet zugeordnet, wobei die Permanentmagnete derart in Bezug auf die jeweils zugehörigen Hall-Sensoren angeordnet sind, dass infolge einer Verkippung der Kontaktbrücke eine Relativbewegung zwischen den jeweiligen Hall-Sensoren und dem zugehörigen Permanentmagneten entsteht. Die einzelnen Permanentmagnete können somit sehr genau relativ zu den einzelnen Hall-Sensoren positioniert werden, wodurch die Schaltpunkte der einzelnen Schalter nicht nur individuell sondern auch hochpräzise eingestellt werden können.

Obwohl den einzelnen Hall-Sensoren vorzugsweise Permanentmagneten zugeordnet sind, sei der Vollständigkeit halber an dieser Stelle erwähnt, dass alternativ hierzu auch jedem der Hall-Sensoren ein Elektromagnet zur Erzeugung des erforderlichen Magnetfelds zugeordnet sein kann.

Die ausschließliche Anordnung der Hall-Sensoren entlang eines einzigen Randbereichs der Kontaktbrücke wird dadurch ermöglicht, dass beispielsweise unipolare Hall-Sensoren im Unterschied zu mechanisch arbeitenden Druckschaltern durch Umpolen des dauermagnetischen Feldes die Zuordnung zwischen Wegrichtung und Schaltpunkt ändern und somit anders als mechanisch arbeitende Druckschalter nicht nur einen Schaltweg aufweisen, entlang dessen sie einen Schaltpunkt erreichen. Im Unterscheid dazu weisen bipolare Hall-Sensoren von Haus aus zwei Schaltwege auf, in Richtung derer sich jeweils ein Schaltpunkt befindet.

Diese Eigenschaft lässt sich dahingehend zu Nutze machen, dass beispielsweise von einem im oberen Randbereich der Kontaktbrücke angeordneten unipolaren Hall-Sensor nicht nur dann ein Schaltsignal abgegeben wird, wenn der Fahrer direkt auf den linken oder rechten oberen Bereich der Kontaktbrücke drückt; vielmehr wird durch einen solchen unipolaren Hall-Sensor bei entsprechend umgepoltem Magnetfeld auch dann ein Schaltsignal abgegeben, wenn der Fahrer beispielsweise an der unteren Seite auf die Kontaktbrücke drückt, was infolge der kippbaren Lagerung derselben zum Anheben der Kontaktbrücke an ihrer Oberseite und somit zum Erreichen des anderen Schaltpunkts führt. Dies setzt jedoch voraus, dass die Magnetfelder der zu den jeweils unipolaren Hall-Sensoren zugehörigen Permanentmagneten zueinander entgegengesetzte

Orientierungen aufweisen, um im Falle des Anhebens der Oberseite der Kontaktbrücke ein Schaltsignal erzeugen zu können. Hierauf wird im Folgenden noch genauer eingegangen.

Anstelle solche unipolare Hall-Sensoren entlang eines einzigen Randbereichs der Kontaktbrücke zu positionieren ist es ebenfalls möglich, mehrere bipolare Hall-Sensoren entlang eines einzigen Randbereichs zu positionieren, welche in der voran beschriebenen Weise zwei Schaltpunkte aufweisen.

Unabhängig davon, ob bei der erfindungsgemäßen Lenkradhupe bipolare oder unipolare Hall-Sensoren zum Einsatz kommen, kann jedoch grundsätzlich durch die Verwendung von Hall-Sensoren erreicht werden, dass es ausreichend ist, die Hall-Sensoren nur entlang eines einzigen Randbereichs der Kontaktbrücke anzuordnen, sodass nur eine einzige Leiterplatte vorgesehen werden muss, auf der die einzelnen Hall-Sensoren angeordnet sind. Abweichend von den bekannten Lenkradhupen unter Verwendung mechanisch arbeitender Druckschalter müssen somit nicht mehrere gleich bestückte Leiterplatten vorgesehen werden. Somit kann zum einen die Anzahl der erforderlichen Teile reduziert und zum anderen die Teile- bzw. Systemintegration erhöht werden.

Wie bereits zuvor erwähnt wurde, können die Näherungssensoren als bipolare Hall-Sensoren ausgebildet sein, wobei in diesem Falle vorzugsweise zwei Hall-Sensoren benachbart zueinander in einem Randbereich der Kontaktbrücke anzuordnen sind. Die Anordnung zweier Hall-Sensoren erweist sich dabei dadurch als vorteilhaft, dass im Falle, dass einer der beiden Hall-Sensoren ausfallen sollte, in aller Regel der andere Hall-Sensor noch aktiv ist, womit einem vollständigen Ausfall der Lenkradhupe begegnet werden kann. Darüber hinaus bestünde bei der Verwendung von nur einem Hall-Sensor die Gefahr, dass sich dieser eine Sensor bei entsprechender Betätigung der Kontaktbrücke genau auf deren Kippachse befindet, sodass keine Relativbewegung zwischen ihm und dem zugehörigen Magneten entstünde und folglich auch kein Schaltsignal erzeugt werden würde. Um dem entgegenzuwirken, ist es daher vorgesehen, zumindest zwei Näherungssensoren entlang eines einzigen Randbereichs der Kontaktbrücke anzuordnen, sodass zumindest einer der beiden Näherungssensoren in jedem Fall bei einer Betätigung der Lenkradhupe reagiert.

Im Falle, dass in der voran beschriebenen Art und Weise unipolare Hall-Sensoren zum Einsatz kommen sollten, erweist es sich als vorteilhaft, zumindest drei Hall-Sensoren entlang eines einzigen Randbereiches der Kontaktbrücke vorzusehen. So würde im Falle, dass bei drei unipolaren Hall-Sensoren die Kontaktbrücke beispielsweise um eine Achse verkippt werden würde, auf der gerade der mittlere Hall-Sensor liegt, in jedem Falle einer der beiden äußeren Hall-Sensoren reagieren, um das erforderliche Schaltsignal zu erzeugen.

Da jedoch unipolare Hall-Sensoren je nach ihrer Auslegung nur dann schalten, wenn sie entweder in ein Magnetfeld mit positiver Flussdichte oder in ein Magnetfeld mit negativer Flussdichte eintauchen, ist es bei der Verwendung von unipolaren Hall-Sensoren erforderlich, die zugehörigen Permanentmagneten benachbarter Hall-Sensoren derart auszurichten, dass die jeweils zugehörigen Magnetfelder zueinander entgegengesetzte Orientierungen aufweisen, bzw. dass die Flussdichten der jeweils zugehörigen Magnetfelder zueinander entgegengesetzte Polaritäten besitzen.

Zwar bedarf es beim Einsatz von unipolaren Hall-Sensoren dreier Hall-Sensoren, jedoch erweist sich die Verwendung von unipolaren Hall-Sensoren gegenüber bipolaren Hall-Sensoren dahingehend als vorteilhaft, dass sich durch die Verwendung von unipolaren Hall-Sensoren die Schaltpunkte der Lenkradhupe noch präziser einstellen lassen. So weisen nämlich unipolare Hall-Sensoren deutlich schmalere Schalthysteresen als bipolare Hall-Sensoren auf, worunter die Differenz zwischen dem Einschalt- und dem Ausschaltpunkt des jeweiligen Sensors zu verstehen ist. Da ein bipolarer Hall-Sensor somit einen größeren Weg bis zu seinem Ausschaltpunkt zurücklegen muss als ein unipolarer Hall-Sensor, ist die Schaltcharakteristik von bipolaren Hall-Sensoren und damit auch das Schaltempfinden des Fahrers bei der Betätigung einer Lenkradhupe unter Verwendung von bipolaren Hall-Sensoren weniger scharf ausgeprägt als bei unipolaren Hall-Sensoren, weshalb es sich als vorteilhaft erweist, die erfindungsgemäße Lenkradhupe mit unipolaren Hall-Sensoren auszustatten.

Gemäß einer weiteren Ausführungsform weist die Kontaktbrücke auf ihrer Rückseite drei Federelemente auf, welche die Eckpunkte eines gleichschenkligen Dreiecks bilden, wobei die Näherungsschalter derart außerhalb des Dreiecks angeordnet sind, dass sie alle zu derselben Seite des Dreiecks einen Abstand aufweisen, welcher kürzer als der Abstand zu den anderen Seiten des Dreiecks ist. Die den Näherungsschaltern am nächsten liegende Seite des Dreiecks bildet somit infolge der Lagerung der Kontaktbrücke auf den drei Federelementen eine Kippachse, um welche die Kontaktbrücke verkippt wird, wenn beispielsweise eine Druckkraft im Bereich des den drei Näherungsschaltern gegenüberliegenden Federelements aufgebracht wird, was dazu führt, dass sich die Kontaktbrücke im Bereich der drei Näherungsschalter anhebt, wodurch von zumindest einem der Näherungsschalter ein Schaltsignal erzeugt wird. Mit anderen Worten wird durch die Dreipunktlagerung der Kontaktbrücke ein zweiarmiger Hebelmechanismus geschaffen, wodurch ein Absenken des einen Hebelarms ein Anheben des anderen Hebelarms bewirkt, an dessen freien Ende sich die drei Näherungsschalter befinden.

Im Unterschied zu Lenkradhupen mit mechanisch arbeitenden Druckschaltern ermöglicht es die erfindungsgemäße Ausgestaltung einer Lenkradhupe mit berührungslos arbeitenden Näherungsschaltern, dass die Schalter auf der Vorderseite der Kontaktbrücke angeordnet werden können. Die Näherungsschalter können somit auf einer einzigen Platine platziert werden und können im Reparaturfall leichter ausgetauscht werden.

Im Folgenden wird nun die Erfindung rein exemplarisch anhand einer beispielhaften Ausführungsform unter Bezugnahme auf die beigefügten Zeichnungen beschrieben, wobei:
- Fig. 1: eine Draufsicht auf die Kontaktbrücke einer erfin- dungsgemäßen Lenkradhupe zeigt;
- Fig. 2: eine Schnittansicht der Kontaktbrücke der Fig. 1 ent- lang der Schnittführung A - A zeigt;
- Fig. 3: eine Schnittansicht der Kontaktbrücke der Fig. 1 ent- lang der Schnittführung B - B zeigt; und
- Fig. 4: das Zusammenspiel eines Hall-Sensors mit einem Per- manentmagneten veranschaulicht.

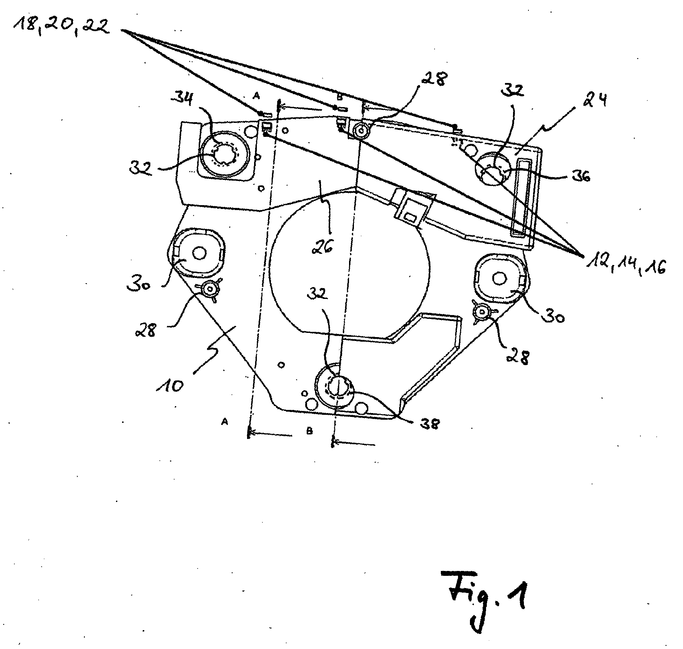

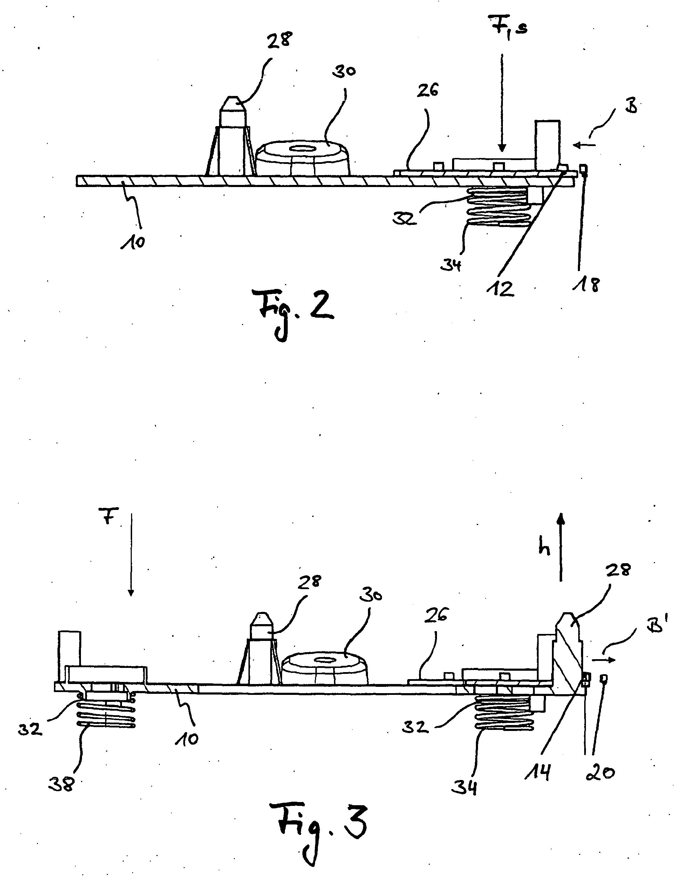

Die Fig. 1 zeigt eine Kontaktbrücke 10 in einer Stellung, die sie bei einer Geradeausfahrt eines Fahrzeugs einnimmt. Wie der Draufsicht der Fig. 1 in Verbindung mit den Fig. 2 und 3 entnommen werden kann, weist die Kontaktbrücke 10 der erfindungsgemäßen Lenkradhupe eine polygonal berandete und scheibenförmige Gestalt auf. Die Kontaktbrücke 10 weist insgesamt drei Spiralfederelemente 34, 36, 38 auf ihrer Rückseite auf, über die die Kontaktbrücke 10 federnd kippbar in einer entsprechenden Aufnahme eines Lenkrades (nicht dargestellt) gelagert ist. Die drei Spiralfederelemente 34, 36, 38 sind dabei derart an der Rückseite der Kontaktbrücke 10 an an der Rückseite der Kontaktfederbrücke 10 ausgebildeten Federaufnahmestutzen 32 befestigt, dass sie die Eckpunkte eines gleichschenkligen Dreiecks bilden. Die zwei Spiralfederelemente 34, 36 befinden sich dabei an zwei sich gegenüberliegenden Randbereichen im oberen Drittel der Kontaktbrücke 10, wohingegen sich das Spiralfederelement 38 am unteren Rand der Kontaktbrücke 10 befindet.

Auf ihrer Vorderseite weist die Kontaktbrücke 10 zwei Befestigungssockel 30 auf, welche sich an zwei gegenüberliegenden seitlichen Randbereichen der Kontaktbrücke 10 befinden und welche zur Ausrichtung und Befestigung eines hier nicht dargestellten Luftsackmoduls dienen. Darüber hinaus sind an der Vorderseite der Kontaktbrücke 10 drei Befestigungszapfen 28 vorgesehen, welche zur Anbringung und Befestigung eines die Kontaktbrücke 10 und ein Luftsackmodul überdeckenden Verkleidungselements dient.

Wie wiederum der Zusammenschau der Fig. 1 und 3 entnommen werden kann, erstreckt sich quer über das obere Drittel der Kontaktbrücke 10 eine Leiterplatte 26, welche verschiedene elektronische Komponenten zur Auswertung und Verarbeitung der Schaltsignale aufweisen, die von den im Folgenden genauer beschriebenen berührungslos arbeitenden Näherungsschaltern abgegeben werden.

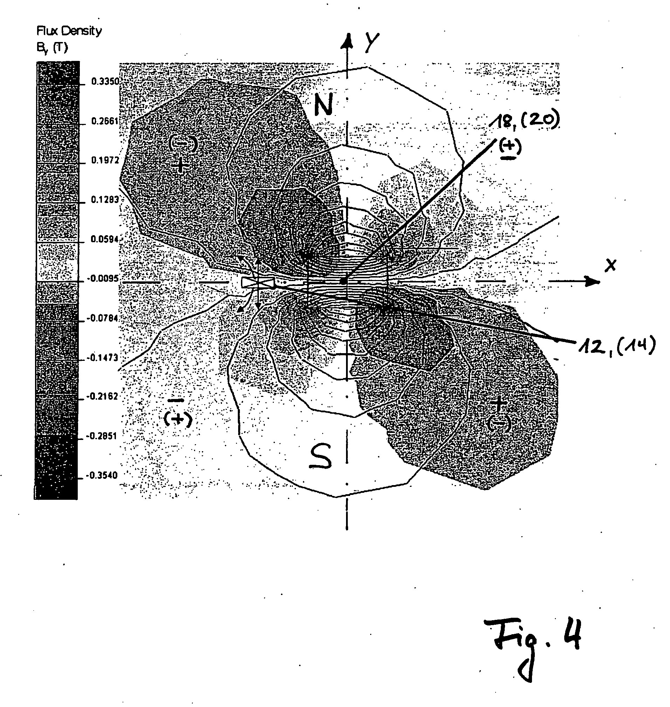

Bei diesen berührungslos arbeitenden Näherungsschaltern handelt es sich bei der in der Fig. 1 dargestellten Kontaktbrücke 10 um drei unipolare Hall-Sensoren 12, 14, 16, welche entlang des oberen Randes der Kontaktbrücke 10 beabstandet zueinander auf der Leiterplatte 26 befestigt sind. In der Fig. 1 ist dabei der rechte Hall-Sensor 16 nur schematisch dargestellt, da sich dieser unterhalb einer die Leiterplatte 26 schützenden Abdeckung 24 befindet, welche in der Fig. 1 jedoch nur in der rechten Hälfte der Kontaktbrücke 10 dargestellt ist. Jedem der Hall-Sensoren 12, 14, 16 ist ein Permanentmagnet 18, 20, 22 zugeordnet, welche derart in Bezug auf die jeweils zugehörigen Hall-Sensoren 12, 14, 16 stationär an dem die Kontaktbrücke 10 aufnehmenden Lenkrad angeordnet sind, dass infolge einer Verkippung der Kontaktbrücke 10 eine Relativbewegung zwischen den jeweiligen Hall-Sensoren 12, 14, 16 und den zugehörigen Permanentmagneten 18, 20, 22 entsteht. Die Hall-Sensoren 12, 14, 16 sind dabei derart relativ zu den Permanentmagneten 18, 20, 22 positioniert, dass sie sich in der Ausgangsstellung der Kontaktbrücke 10, in der diese also nicht von einem Fahrer betätigt wird, in einem annähernd magnetfeldfreien Bereich der Permanentmagneten 18, 20, 22 befinden, wie dies in der Fig. 4 erkennbar ist. Wie aus der Darstellung entnommen werden kann, befindet sich der unipolare Hall-Sensor 12 in der Ruhestellung der Kontaktbrücke 10 relativ zu dem Permanentmagneten 18 in einem flussdichtarmen Bereich, in dem das Magnetfeld des Permanentmagneten 18 eine magnetische Flussdichte By in Richtung des Hall-Sensors aufweist, welche betragsmäßig kleiner als 0,0095 Tesla ist, und somit nicht ausreicht, um den Schaltpunkt des Hall-Sensors 12 zu erreichen.

Wenn nun ein Fahrer beispielsweise eine Druckkraft F im oberen Bereich der Kontaktbrücke 10 auf diese aufbringt (siehe Fig. 2), so führt dies dazu, dass sich die Kontaktbrücke 10 im oberen Bereich absenkt, so dass die Federn 34, 36 komprimiert werden. Bei dieser Absenkung taucht der Hall-Sensor 12 in jenen Quadranten des von dem Permanentmagneten 18 erzeugten Magnetfelds ein, in dem dieses eine negative Flussdichte besitzt (siehe Fig. 4). Beim Eintauchen in das Magnetfeld detektiert der Hall-Sensor 12 eine Hall-Spannung, welche von den auf der Leiterplatte 26 befindlichen Elektronikkomponenten als Schaltsignal zur Erzeugung eines Huptons ausgelesen werden kann. Lässt anschließend die Druckkraft F wieder nach, so drücken die Federn 34, 36 die Kontaktbrücke 10 wieder in ihre Ausgangsstellung zurück, in der sich der Hall-Sensor 12 in dem im Wesentlichen magnetfeldfreien Bereich des Permanentmagneten 18 befindet, in der von ihm nicht länger eine zum Schaltpunkt ausreichende Hall-Spannung detektiert wird.

Wenn nun der Fahrer nicht im oberen Bereich der Kontaktbrücke 10 sondern im unteren Bereich derselben eine Druckkraft F auf dieselbe ausübt, wie es in der Fig. 3 dargestellt ist, so führt dies dazu, dass sich der in der Fig. 3 nach rechts frei auskragende Bereich der Leiterplatte 26 anhebt, wie dies durch den Pfeil h dargestellt ist.

Da es sich bei den Hall-Sensoren bei der in den Fig. 1 bis 3 dargestellten Ausführungsform um unipolare Hall-Sensoren handelt, sprechen diese lediglich auf Magnetfelder mit Flussdichten entweder positiver oder negativer Polarität an. Dies bedeutet, dass der Hall-Sensor 12 bei einer Bewegung in Richtung des Pfeils h bzw. beim Eintritt in das Magnetfeld des Permanentmagneten 18 mit positiver Flussdichte (siehe Fig. 4) keinen Schaltpunkt besitzt und somit nicht schaltet.

Um dennoch auch bei einer Anhebung h des oberen Bereichs der Kontaktbrücke 10 mit einem der Hall-Sensoren 12, 14, 16 ein Schaltsignal erzeugen zu können, weisen die jeweils benachbarten Permanentmagneten 18, 20, 22 jeweils zueinander entgegengesetzte Polaritäten auf, wie dies anhand der Pfeile B, B' in den Fig. 2 und 3 veranschaulich ist. Anschaulich anhand der Fig. 4 erläutert bedeutet dies, dass der Permanentmagnet 20 ein zu dem in der Fig. 4 dargestellten Magnetfeld einfach achsgespiegeltes Magnetfeld aufweist, was bedeutet, dass die Magnetfeldquadranten der Fig. 4 mit positiver Flussdichte By und die Magnetfeldquadranten der Fig. 4 mit negativer Flussdichte By vertauscht sind, wie es in der Fig. 4 durch die in Klammern angegebenen Vorzeichen angedeutet ist. Die Fig. 4 veranschaulicht dabei lediglich die Komponente der Flussdichte des von dem Permanentmagneten 18 erzeugten Magnetfeldes in y-Richtung, womit sich die Vorzeichen der einzelnen Quadranten erklären.

Infolge einer Anhebung des Hall-Sensors 14 gelangt dieser somit ebenfalls in ein Magnetfeld mit negativer Polarität und erzeugt somit in der gewünschten Weise ein Schaltsignal zur Erzeugung eines Huptons.

Der Vollständigkeit halber sei an dieser Stelle noch erwähnt, dass es anstelle einer Vertauschung der Polaritäten der jeweiligen Permanentmagneten 18, 20, 22 ebenfalls möglich wäre, für den Näherungssensor 14 einen Hall-Sensor zu verwenden, welcher auf Magnetfelder mit positiver magnetischer Flussdichte anspricht.

### Bezugszeichenliste

- 10: Kontaktbrücke
- 12: Hall-Sensor
- 14: Häll-Sensor
- 16: Hall-Sensor
- 18: Permanentmagnet
- 20: Permanentmagnet
- 22: Permanentmagnet
- 24: Abdeckung
- 26: Leiterplatte
- 28: Befestigungszapfen
- 30: Befestigungssockel
- 32: Federaufnahmestutzen
- 34: Spiralfederelement
- 36: Spiralfederelement
- 38: Spiralfederelement

- F: Druckkraft
- s: Senkung
- h: Hebung
- B: Magnetfeld
- B': Magnetfeld

## Patentansprüche

1. Lenkradhupe für ein Kraftfahrzeug, umfassend:
- eine federnd kippbar gelagerte Kontaktbrücke (10) und
- eine Mehrzahl von als Hall-Sensoren ausgebildeter berührungslos arbeitender Näherungsschalter (12, 14, 16), welche derart in Bezug auf die Kontaktbrücke (10) angeordnet sind, dass zumindest einer der Näherungsschalter (12, 14, 16) infolge einer Verkippung der Kontaktbrücke (10) ein Schaltsignalsignal zur Erzeugung eines Huptons abgibt,
**dadurch gekennzeichnet,**
- **dass** die Lenkradhupe mindestens drei Näherungsschalter umfasst und
- **dass** die Näherungsschalter entlang eines einzigen Randbereichs der Kontaktbrücke (10) angeordnet sind, so dass durch eine Verkippung der Kontaktbrücke alle Näherungsschalter gleichzeitig anhebbar und durch eine andere Verkippung gleichzeitig absenkbar sind.

2. Lenkradhupe nach Anspruch 1,
**dadurch gekennzeichnet, dass**
jedem der Hall-Sensoren (12, 14, 16) ein Permanentmagnet (18, 20, 22) zugeordnet ist, wobei die Permanentmagnete (18, 20, 22) derart in Bezug auf die jeweils zugehörigen Hall-Sensoren (12, 14, 16) angeordnet sind, dass infolge einer Verkippung der Kontaktbrücke (10) eine Relativbewegung zwischen den jeweiligen Hall-Sensoren (12, 14, 16) und den zugehörigen Permanentmagnete (18, 20, 22) entsteht.

3. Lenkradhupe nach Anspruch 2,
**dadurch gekennzeichnet, dass** die jeweils zugehörigen Permanentmagneten (18, 20, 22) stationär angeordnet sind.

4. Lenkradhupe nach zumindest einem der vorstehenden Ansprüche,
**dadurch gekennzeichnet, dass**
die Näherungsschalter (12, 14, 16) auf einer einzigen auf der Kontaktbrükke befestigten Leiterplatte (26) angeordnet sind.

5. Lenkradhupe nach zumindest einem der Ansprüche 2 bis 4,
**dadurch gekennzeichnet, dass**
die Permanentmagnete (18, 20, 22) benachbarter Hall-Sensoren (12, 14, 16) derart ausgerichtet sind, dass die jeweils zugehörigen Magnetfelder zueinander entgegengesetzte Orientierungen aufweisen.

6. Lenkradhupe nach Anspruch 5,
**dadurch gekennzeichnet, dass**
die Näherungsschalter (12, 14, 16) als unipolare Hall-Sensoren ausgebildet sind.

7. Lenkradhupe nach zumindest einem der vorstehenden Ansprüche,
**dadurch gekennzeichnet, dass**
die Kontaktbrücke (10) auf ihrer Rückseite drei Federelemente (32) aufweist, welche die Eckpunkte eines gleichschenkligen Dreiecks bilden, wobei die Näherungsschalter (12, 14, 16) derart außerhalb des Dreiecks angeordnet sind, dass sie alle zu derselben Seite des Dreiecks einen Abstand aufweisen, welcher kürzer ist als der Abstand zu den anderen Seiten des Dreiecks.

8. Lenkradhupe nach zumindest einem der vorstehenden Ansprüche,
**dadurch gekennzeichnet, dass**
die Nährungsschalter (12, 14. 16) auf der Vorderseite der Kontaktbrücke angeordnet sind.

## Claims

1. Steering wheel horn for a motor vehicle, comprising:
- a spring-mounted tiltable contact bridge (10) and
- a plurality of non-contacting proximity switches (12, 14, 16) designed as Hall sensors, said switches being arranged in relation to the contact bridge (10) such that at least one of the proximity switches (12, 14, 16) emits a switching signal for generating a horn note, in response to a tipping of the contact bridge (10),
**characterised in**
- **that** the steering wheel horn comprises at least three proximity switches and
- **that** the proximity switches are arranged along a single edge region of the contact bridge (10) so that all proximity switches can be simultaneously raised by a tipping of the contact bridge, and simultaneously lowered by another tipping.

2. Steering wheel horn according to claim 1,
**characterised in that**
each of the Hall sensors (12, 14, 16) is allocated a permanent magnet (18, 20, 22), wherein the permanent magnets (18, 20, 22) are arranged in relation to the particular associated Hall sensors (12, 14, 16) such that, as a result of a tipping of the contact bridge (10), a relative movement occurs between the particular Hall sensors (12, 14, 16) and the associated permanent magnets (18, 20, 22).

3. Steering wheel horn according to claim 2,
**characterised in that** the particular associated permanent magnets (18, 20, 22) are stationarily arranged.

4. Steering wheel horn according to at least one of the preceding claims,
**characterised in that**
the proximity switches (12, 14, 16) are arranged on a single circuit board (26) mounted on the contact bridge.

5. Steering wheel according to at least one of claims 2 to 4,
**characterised in that**
the permanent magnets (18, 20, 22) of neighbouring Hall sensors (12, 14, 16) are aligned such that the particular associated magnetic fields have opposite orientations relative to one another.

6. Steering wheel horn according to claim 5,
**characterised in that**
the proximity switches (12, 14, 16) are designed as unipolar Hall sensors.

7. Steering wheel horn according to at least one of the preceding claims,
**characterised in that**
the contact bridge (10) has, on its back, three spring elements (32) which form the corner points of an isosceles triangle, wherein the proximity switches (12, 14, 16) are arranged outside the triangle such that they all have a distance from the same side of the triangle which is shorter than the distance from the other sides of the triangle.

8. Steering wheel horn according to at least one of the preceding claims,
**characterised in that**
the proximity switches (12, 14, 16) are arranged on the front side of the contact bridge.

## Revendications

1. Klaxon de volant pour véhicule, comprenant :
✔ un pont de contact (10) sur ressort pouvant basculer et une pluralité de commutateurs de proximité (12, 14, 16) sans contact en forme de capteurs à effet Hall, disposés de telle façon par rapport au pont de contact (10) qu'au moins un des commutateurs de proximité (12, 14, 16), suite à un basculement du pont de contact (10), émet un signal de commutation afin de produire un son,
**caractérisé en ce que**
✔ le klaxon de volant comprend au moins trois commutateurs de proximité et
✔ les commutateurs de proximité sont disposés le long d'une zone périphérique unique du pont de contact (10) de telle manière qu'un basculement du pont de contact entraîne la montée de tous les commutateurs de proximité en même temps et un autre basculement leur abaissement simultané.

2. Klaxon de volant selon la revendication 1, **caractérisé en ce qu'**un aimant permanent (18, 20, 22) est affecté à chacun des capteurs à effet Hall (12, 14, 16), les aimants permanents (18, 20, 22) étant disposés par rapport aux capteurs à effet Hall (12, 14, 16) correspondants de telle façon qu'à la suite d'un basculement du pont de contact (10), un mouvement relatif apparaisse entre les capteurs à effet Hall concernés (12, 14, 16) et les aimants permanents (18, 20, 22) correspondants.

3. Klaxon selon la revendication 2, **caractérisé en ce que** les aimants permanents (18, 20, 22) correspondants sont disposés de manière stationnaire.

4. Klaxon de volant selon au moins l'une quelconque des revendications précédentes, **caractérisé en ce que** les commutateurs de proximité (12, 14, 16) sont disposés sur un circuit imprimé unique (26) fixé sur le pont de contact.

5. Klaxon de volant selon au moins l'une quelconque des revendications 2 à 4, **caractérisé en ce que** les aimants permanents (18, 20, 22) de capteurs à effet Hall voisins (12, 14, 16) sont orientés de telle manière que les champs magnétiques respectifs présentent entre eux des orientations opposées.

6. Klaxon de volant selon la revendication 5, **caractérisé en ce que** les commutateurs de proximité (12, 14, 16) sont des capteurs à effet Hall unipolaires.

7. Klaxon selon au moins l'une quelconque des revendications précédentes, **caractérisé en ce que** le pont de contact (10) présente, à l'arrière, trois ressorts (32) formant les sommets d'un triangle équilatéral, les commutateurs de proximité (12, 14, 16) étant disposés à l'extérieur du triangle de telle façon qu'ils présentent tous, par rapport au même côté du triangle, une distance plus courte que la distance par rapport aux autres côtés du triangle.

8. Klaxon de volant selon au moins l'une quelconque des revendications précédentes, **caractérisé en ce que** les commutateurs de proximité (12, 14, 16) sont disposés sur le devant du pont de contact.
